# EUROPÄISCHE PATENTSCHRIFT

(11) **EP 1 554 788 B1**
(45) Veröffentlichungstag und Bekanntmachung des Hinweises auf die Patenterteilung: **20.01.2010**
(21) Anmeldenummer: 03757514.9
(22) Anmeldetag: 16.10.2003
(51) Int. Cl.: H02B 1/052

(54) **ELEKTRISCHES GERÄT**
ELECTRICAL APPARATUS
APPAREIL ELECTRIQUE

(30) Priorität: 16.10.2002 AT 15712002
(43) Veröffentlichungstag der Anmeldung: 20.07.2005
(73) Patentinhaber: Moeller Gebäudeautomation GmbH, 3943 Schrems (AT)
(72) Erfinder: HAMMERMAYER, Ernst, A-1210 Wien (AT)
(74) Vertreter: Gibler, Ferdinand
(86) Internationale Anmeldenummer: PCT/AT2003/000311
(87) Internationale Veröffentlichungsnummer: WO 2004/036710

(56) Entgegenhaltungen:
- EP-A- 1 058 360
- DE-U- 8 704 865

## Beschreibung

Die Erfindung bezieht sich auf ein elektrisches Gerät gemäß dem Oberbegriff des Anspruches 1.

Ein solches Gerät wurde z.B. durch die FR-A-2 716 042 bekannt Bei diesem bekannten Gerät sind zur Aufnahme von Anschlusselementen von Sammelschienen Liftklemmen vorgesehen, deren senkrecht zur Tragschiene verlaufender Öffnungsweg abzüglich der Abmessung der Anschlusselemente in Richtung des Öffnungsweges der Klemme zumindest so groß wie die Tiefe der im Querschnitt hutförmigen Tragschiene ist. Dabei ist die Einstecktiefe der Sammelschiene erheblich größer als die Differenz der Breite der Ausnehmung des Gehäuses des Gerätes zur Breite der Tragschiene.

Bei dieser bekannten Lösung ist es daher erforderlich beim Abbauen eines solchen Gerätes von einer Tragschiene die Klemme zur Aufnahme der Sammelschiene vollständig zu öffnen und beide Halteeinrichtung, die beide gegen ihre Ruhestellung elastisch federnd ausgebildet sind, in ihre Ruhestellung zu bringen, in denen sie sich außerhalb des lichten Raumes der Ausnehmung befinden, um das Gerät senkrecht zur Tragschiene von dieser abheben und anschließen parallel zur Ebene der Tragschiene bewegen zu können, um die Sammelschieneaußer Eingriff mit dem Gerät zu bringen.

Dabei ergibt sich eben der Nachteil, dass die Klemme vollständig geöffnet werden muss und diese einen entsprechend großen Öffnungsweg aufweisen muss.

Die EP 1 058 360 A beschreibt ein Befestigungssystem für ein elektrisches Gerät, wobei in bekannter Weise an der Rückseite des Gerätegehäuses eine Ausnehmung zur Aufnahme einer Tragschiene vorgesehen ist Zur Festlegung des Gerätes an der Tragschiene ist an einem Ende der Ausnehmung eine verschiebbare und in deren Haltestellung verrastbare und elastisch federnde Halteeinrichtung vorgesehen, am anderen Ende ist lediglich eine gehäusefeste Nase zum Eingriff in die Tragschiene ausgebildet

Die DE 87 04 865 U zeigt eine seit langem bekannte Vorrichtung zur Befestigung eines elektrischen Schaltgeräts auf einer hutprofilartig ausgebildeten Tragschiene durch Aufschnappen. Durch das Ausklinken eines Schiebers und Lösen einer Kontaktschraube ist das Schaltgerät soweit quer zur Tragschienenachse verschiebbar, bis die äußere Kontur des Schaltgeräts nicht mehr von der Sammelschiene verdeckt wird und so das Schaltgerät abnehmbar ist

Nachteilig an Einrichtungen gemäß der EP 1 058 360 A und der DE 87 04 865 U ist, dass diese lediglich das Anordnen und/oder das Entfernen der Vorrichtung von einer an der Seite der verschiebbaren Halteeinrichtung angeordneten Sammelschiene ermöglichen.

Aufgabe der Erfindung ist es, diesen Nachteil zu vermeiden und ein Gerät der eingangs erwähnten Art vorzuschlagen, das sich rasch und einfach von einer Tragschiene demontieren lässt.

Ferner ist es Aufgabe der Erfindung ein Gerät anzugeben, das sich aus einem durch eine Sammelschiene beschalteten Geräteverbund und zwar gleichgültig, ob die Sammelschiene im oberen oder unteren Bereich des Gerätes vorgesehen ist, durch zur Tragschiene senkrechtes Abheben aus dem Verbund gelöst werden kann.

Erfindungsgemäß wird dies bei einem Gerät der eingangs erwähnten Art durch die kennzeichnenden Merkmale des Anspruches 1 erreicht.

Durch die vorgeschlagenen Maßnahmen ist sichergestellt, dass das Gerät an der Tragschiene anliegend in deren Querrichtung soweit verschoben werden kann, dass die Sammelschiene, bzw. deren Anschlusselemente außer Eingriff mit dem zu demontierenden Gerät kommen, und dieses anschließend senkrecht zur Tragschiene von dieser wegbewegt werden kann.

Dabei genügt es jene Klemme, in der ein Anschlusselement der Sammelschiene gehalten ist zu lockern. Ein vollständiges Öffnen der Klemme, wie dies bei der bekannten Lösung erforderlich ist, ist dabei nicht notwendig.

Selbstverständlich ist es zum Demontieren eines erfindungsgemäßen Gerätes erforderlich nach dem Lösen der Anschlussdrähte von den Klemmen mindestens eine der beiden Halteeinrichtungen in die Ruhestellung zu bringen, in der sie nicht in den lichten Raum der Ausnehmung eingreift und außer Eingriff mit der Tragschiene ist.

Die Montage eines erfindungsgemäßen Gerätes erfolgt in der Weise, dass die beiden Halteeinrichtungen in ihre Arbeitsstellungen gebracht werden und das Gerät nahe an die Tragschiene herangebracht wird. Anschließend wird mindestens ein Anschlusselement der Sammelschiene in die entsprechende geöffnete Klemme eingeführt und das Gerät mit einer der beiden Halteeinrichtungen in die Tragschiene eingehängt. Durch Andrücken des Gerätes an die Tragschiene schnappt die zweite Halteeinrichtung unter federndem Zurückweichen in die Tragschiene ein wonach ein Anschlussdraht angeschlossen werden kann.

Bei einer mittig in der Ausnehmung montierten Tragschiene und gleichgroßen Einstecktiefen der sowohl im oberen als auch im unteren Gerätebereich vorgesehenen Klemmen können die Merkmale des Anspruches 2 vorgesehen sein.

Um eine im wesentlichen genaue Ausrichtung von mehreren Geräten auf einer Tragschiene auf einfache Weise zu ermöglichen, ist es vorteilhaft die Merkmale des Anspruches -3 vorzusehen.

Dabei weist die Vertiefung nur eine sehr geringe Tiefe auf, sodass sich nur sehr kleine Schultern ergeben, die aber ausreichen, um eine entsprechende Ausrichtung der einzelnen Geräte, bei denen es sich meist um Leitungsschutzschalter oder ähnliche Schaltgeräte handelt, wie sie üblicherweise in Verteilern in elektrischen Installationsanlagen angeordnet werden, auf einer Tragschiene zu ermöglichen.

Durch die Merkmale des Anspruches 4 ergibt sich der Vorteil, dass eine der Halteeinrichtungen in deren Arbeitslage sicher gehalten ist und sich dabei im Wesentlichen die gleichen Verhältnisse ergeben, wie sie bei Lösungen gegeben sind, bei denen die Ausnehmung zur Aufnahme einer Tragschiene von einer starren Nase begrenzt ist, mit der das Gerät in die Tragschiene eingehängt werden kann, und lediglich eine elastisch federnde Halteeinrichtung vorgesehen ist, die dieser Nase gegenüberliegt.

Die Merkmale des Anspruches 5 ermöglichen ein einfaches Lösen der Verriegelung und anschließendes Verschieben der Halteeinrichtung in deren Ruhestellung, in der sie den lichten Raum der Ausnehmung freigibt.

Die Merkmale des Anspruches 6 ermöglichen eine Anordnung und Führung des Haltestückes, bei der dieses einen entsprechenden Ansatz des Gehäuses des Gerätes übergreift. Dabei kann, z.B. im Falle von Leitungsschutzschaltern, auch vorgesehen sein, dass in diesem. Bereich des Gerätes Ausblasschlitze angeordnet sind.

Um eine einfache Herstellung des Haltestückes zu ermöglichen, können die Merkmale des Anspruches 7 vorgesehen sein.

Um eine einfache und sichere Verrastung des Halteteiles in dessen Arbeitslage sicherzustellen, ist es vorteilhaft die Merkmale des Anspruches 8 vorzusehen. Dabei kann die Abstüzung der Einrastnoppe zweckmäßig an der Begrenzungsfläche der Ausnehmung zur Aufnahme der Tragschiene erfolgen.

Eine in konstruktiver Hinsicht sehr einfache Lösung ergibt sich durch die Merkmale des Anspruches 9, wobei durch die vorgeschlagenen Maßnahmen auch eine sehr einfache Demontage eines Gerätes von der Tragschiene sichergestellt ist.

In diesem Zusammenhang ist es vorteilhaft die Merkmale des Anspruches 10 vorzusehen.

Um einem möglichen Verlust des Haltestückes vorzubeugen, ist es zweckmäßig die Merkmale des Anspruches 11 vorzusehen, wobei diese Begrenzung ein Abziehen des Haltestückes von dem Gehäuse des Gerätes verhindert.

Dabei ist es vorteilhaft die Merkmale des Anspruches 12 vorzusehen, wodurch sich eine in konstruktiver Hinsicht sehr einfache Lösung ergibt die auch ein sehr hohes Maß an Sicherheit gegen ein unbeabsichtigtes Abziehen des Haltestückes bietet. Außerdem wird durch den Durchbruch auch sichergestellt, dass über diesen und in dessen Bereich angeordnete Ausblasschlitze eine Verbindung zwischen der Umgebung und dem Inneren des Gerätes hergestellt werden kann.

Die Erfindung wird nachstehend unter Bezugnahme auf die Zeichnungen beispielsweise beschrieben. Dabei zeigt:
Fig. 1 ein elektrisches Gerät mit einer erfindungsgemäßen Befestigungseinrichtung in geöffneter Position,
Fig. 2 die Befestigungseinrichtung in Halteposition an der Tragschiene,
Fig. 3 ein Detail der zweiten Halteeinrichtung,
Fig. 4 eine Klemme im Detail,
Fig. 5 mehrere auf einer Tragschiene montierte Geräte,
Fig. 6 die Anordnung nach Fig. 5 bei der Demontage eines Gerätes,
Fig. 7 eine weitere Anordnung mit mehreren auf einer Tragschiene montierten Geräten,
Fig. 8 die Anordnung nach der Fig. 7 bei der Demontage eines Gerätes,
Fig. 9 und 10 die Anordnung nach der Fig. 8 in Vorder- und Seitenansicht und
Fig. 11 eine weitere Anordnung mit mehreren auf einer Tragschiene montierten Geräten.

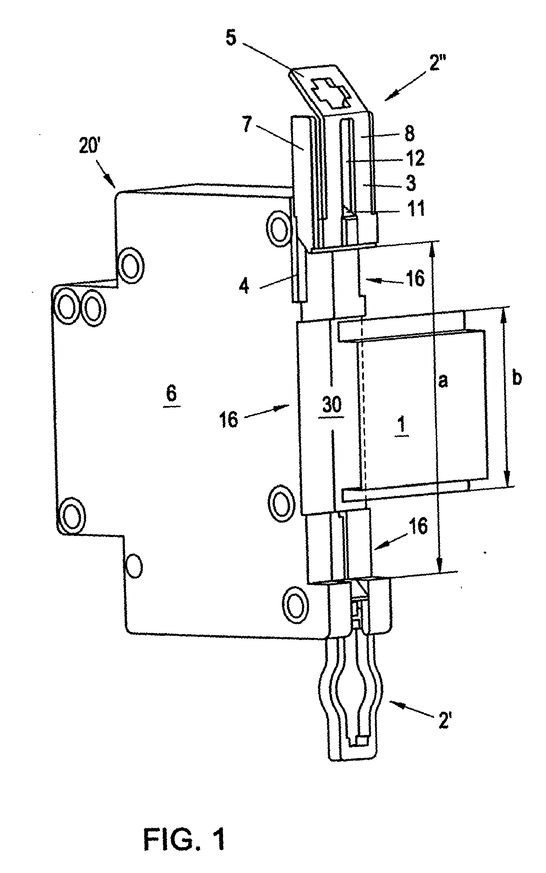

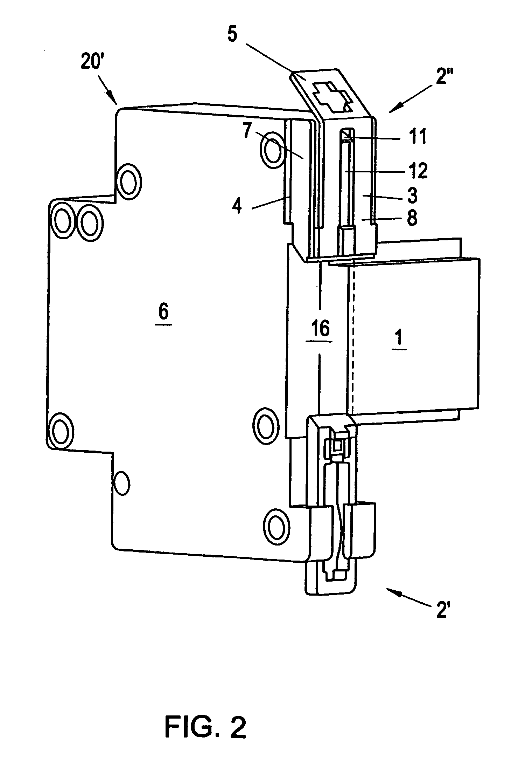

Wie in Fig. 1 und 2 gezeigt, sind an der Geräteaußenwand 6 eines elektrischen Gerätes, z.B. eines Leitungsschutzschalters, einander diametral an den jeweiligen Endbereichen der Schmalseiten eine erste 2' und eine zweite 2" Halteeinrichtung angeordnet. Die Ausbildung der ersten Halteeinrichtung 2' ist Stand der Technik und besteht z.B. aus einer Schnellbefestigungseinrichtung für elektrische Geräte zur Anbringung auf einer im Querschnitt hutförmigen Tragschiene 1, bei der ein federnder Riegel vorgesehen ist, der in seitlichen Führungen des zu befestigenden Gerätes verschiebbar ist und eine rahmenartige, um seine Längsachse symmetrische Gestalt aufweist, wobei eine Raststellung für den Riegel vorgesehen ist. Diese quer zur Tragschiene 1 in eine Halteposition verschiebbare erste Halteeinrichtung 2' kann aber - da im Hinblick auf ihre konkrete konstruktive Ausbildung nicht erfindungswesentlich - beliebig ausgebildet sein.

Die zweite Halteeinrichtung 2" ist quer zur Tragschiene 1 in die Halteposition verschiebbar ausgebildet. Hiezu kann sie gemäß einer bevorzugten Ausführungsform der Erfindung als Haltestück 3 ausgebildet sein, das in Richtung quer zur Tragschiene 1 in Führungen, z.B. Führungsnuten 4 des Gerätes frei verschiebbar und in der Halteposition verrastbar ist.

Das Haltestück 3 ist mit einer Entarretierungseinrichtung 5 ausgebildet, durch deren Betätigung die Verrastung des Haltestücks 3 lösbar ist.

Die freie Verschiebbarkeit des Haltestücks 3 kann gemäß einer bevorzugten Ausführugsform dadurch erreicht werden, dass das Haltestück 3 mit Führungsstegen 7 und das Gerät mit komplementär zu den Führungsstegen 7 ausgebildeten Führungsnuten 4 an einer Gehäuseaußenwand 6 ausgebildet ist, in welchen die Führungsstege 7 frei verschiebbar sind.

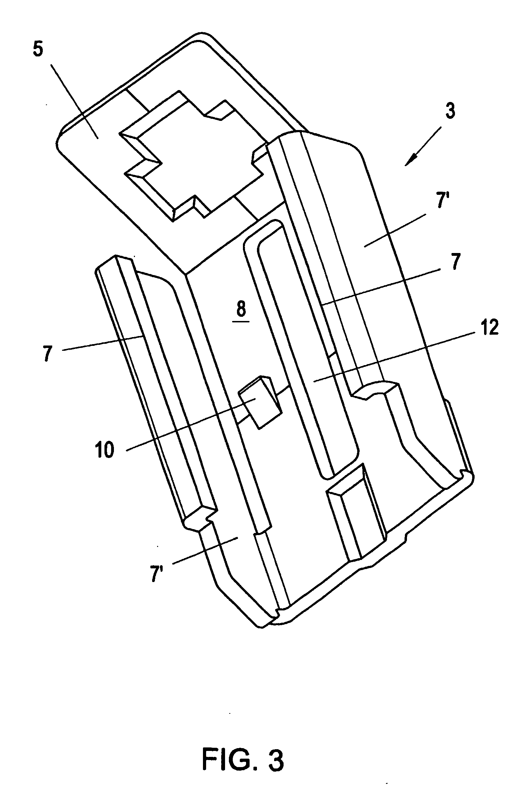

Bei der dargestellten Ausführungsform der Erfindung ist das Haltestück 3 einstückig aus elastischem Kunststoff ausgebildet (Fig. 3).

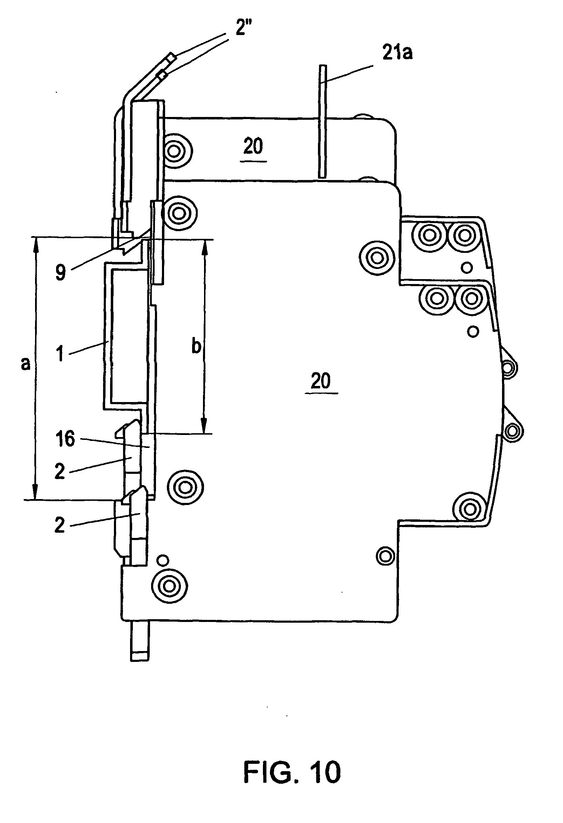

Zur Verrastung in der Halteposition ist das Haltestück 3 mit einem gegen die Geräteaußenwand 6 drückenden Federteil 8, vorzugsweise eine Blattfeder, ausgebildet, auf dem mindestens eine Einrastnoppe 10 vorgesehen ist, die in Haltestellung an einer die Ausnehmung 16 zur Aufnahme der Tragschiene 1 begrenzenden Anlagefläche 9 (Fig. 10) des Gehäuses 20' abgestützt ist, wobei die Einrastnoppe 10, die sägezahnförmig ausgebildet ist (Fig. 3), mit ihrer im wesentlichen senkrechten Fläche an der Anlagefläche 9 anliegt. Wie aus der Fig. 3 zu ersehen ist, ist der Federteil 8 nur über einen kleinen Teil seiner Länge mit Seitenwangen 7' des Halteteiles 3 verbunden, an denen die Führungsstege 7 angeformt sind.

Als Entarretierungsvorrichtung 5 ist eine Lasche vorgesehen, durch deren Betätigung der Federteil 8 von jenem Bereich der Gehäuseaußenwand 6 weg gedrückt, der vom Halteteil 3 übergriffen ist, wodurch die Einrastnoppe 10 außer Eingriff mit der Anlagefläche 9 gerät und der Halteteil aus seiner Arbeitslage in seine Ruhelage verschoben werden kann, in der er nicht mehr in den lichten Raum der Ausnehmung 16 eingreift.

Zur Erleichterung der Entarretierung auch bei beengten Platzverhältnissen ist die Entarretierungsvorrichtung 5 als eine abgewinkelte Betätigungslasche ausgebildet.

Ferner weist das Gehäuse des Gerätes eine Begrenzung 11 in Form einer Noppe, für den Verschiebeweg des Haltestücks 3 auf.

In diesem Zusammenhang ist der Federteil 8 mit einer sich im wesentlichen in Längsrichtung des Haltestücks 3 erstreckenden Durchbrechung 12 ausgebildet, in welche die in Form einer Noppe ausgeführten Begrenzung 11 eingreift und den Bewegungsweg des Haltesteiles 3 in Richtung seiner Ruhestellung begrenzt (Fig. 1).

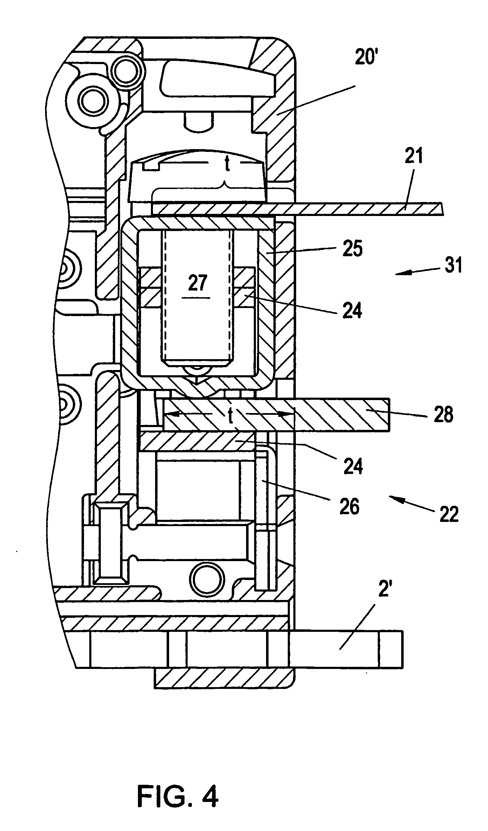

Bei dem dargestellten Ausführungsbeispiel eines erfindungsgemäßen Gerätes sind sogenannte Liftklemmen 31 vorgesehen, die wie aus der Fig. 4 zu ersehen ist, einen im Gehäuse 20' festsitzenden Klemmenkörper 25 und einen gegenüber diesen beweglichen Klemmenteil 24 aufweist. Dabei greift eine einen Schenkel des festsitzenden Klemmenkörpers 25 durchsetzende Schraube 27 in eine Gewindebohrung des beweglichen Klemmenteiles 24 ein. Dieser bewegliche Klemmenteil 24 ist mit einer Klemmhilfe 26 aus einem elektrisch isolierenden Material verbunden, die je nach Stellung des beweglichen Klemmenteils 24 ein Klemmenmaul 26 mehr oder weniger abdeckt, um Fehlklemmungen zu vermeiden.

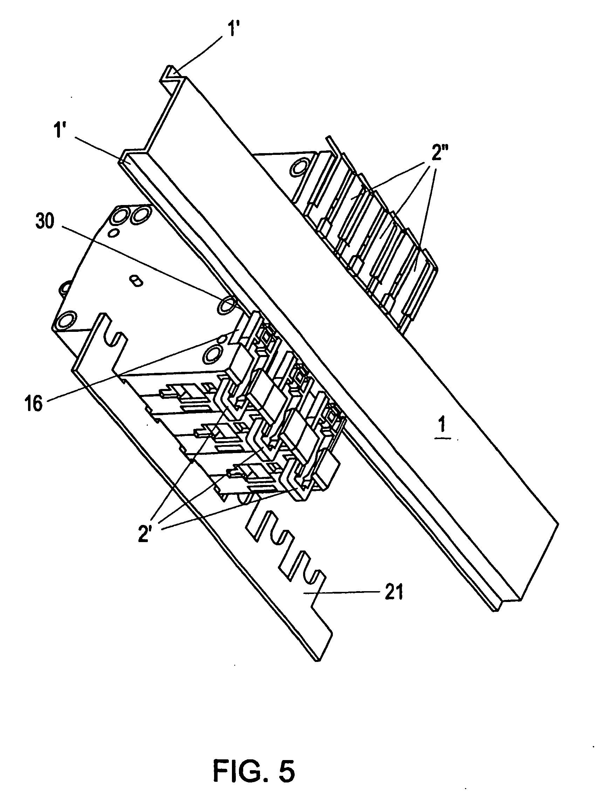

Mit einer solchen Klemme 31 können gleichzeitig z.B. Anschlusselemente einer Kammschiene 21 und ein Draht 28 geklemmt werden, wobei diese elektrisch miteinander verbunden sind. Die vorgesehene Einstecktiefe für die Anschlusselemente ist mit t bezeichnet. In der Fig. 5 ist eine Anordnung von mehreren auf einer Tragschiene 1 gehaltenen Geräten 20 dargestellt, wobei die Anschlusselemente einer Kammschiene 21 von unten her in die Klemmen 31 der Geräte 20 im Ausmaß der Einstecktiefe t hineinragen. Dabei sind in der Fig. 5 die Halteeinrichtungen 2' und 2" in ihren Arbeitsstellungen dargestellt, in denen sie in den lichten Raum der Ausnehmungen 16 der Gehäuse 20' der Geräte 20 hineinragen.

Wie auch aus Fig. 1 zu ersehen ist, ist im Bereich der Ausnehmung 16 der Gerätegehäuse eine Vertiefung 30 vorgesehen , die mittig im Boden der Ausnehmung 16 angeordnet ist und die Randbereiche 1' der im Querschnitt hutförmigen Tragschiene 1 teilweise aufnimmt. Diese Vertiefung 30 erleichtert ein exaktes Ausrichten von mehreren Gerätes 20 sehr wesentlich.

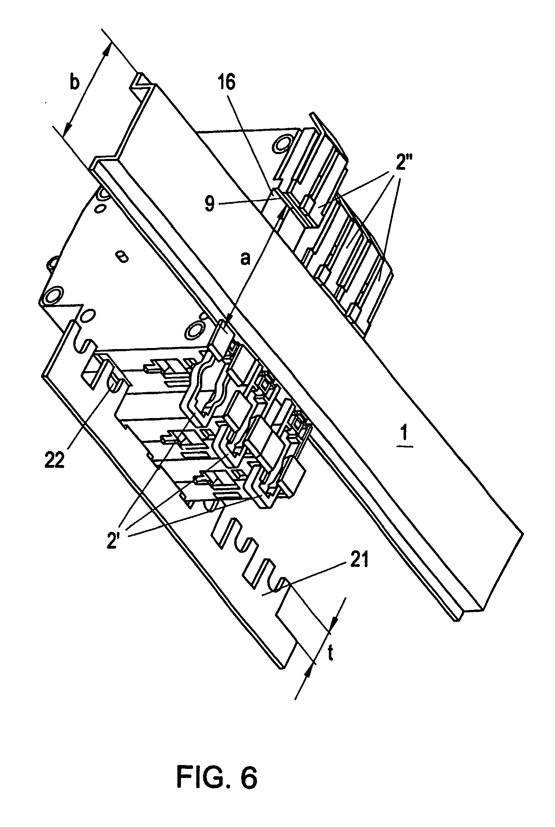

In der Fig. 6 ist die Anordnung nach der Fig. 5 dargestellt, wobei jedoch bei einem Gerät 20 die untere Halteeinrichtung 2' in ihrer Ruhestellung dargestellt ist, in der diese nicht mehr in den lichten Raum der Ausnehmung 16 hineinragt und dieses Gerät 20 an der Tragschiene 1, die im wesentlichen horizontal verläuft, nach oben verschoben ist. Dadurch sind die Anschlusselemente der Kammschiene 21 aus dem Klemmenmaul 22 dieses Gerätes 20 geglitten. Die Einstecktiefe t für die Anschlusselemente der Kammschiene sind bei den im oberen und unteren Gehäusebereich des Gerätes vorgesehenen Klemmen 31 gleich groß gewählt und die Tragschiene 1 ist mittig in der Ausnehmung 16 angeordnet. Da die Ausnehmung 16 in Richtung der Verschiebung des Gerätes im Vergleich zur Abmessung der Tragschiene um einen Betrag größer gewählt ist, welcher zumindest der Einstecktiefe t entspricht, kann das Geräte 20 unbehindert senkrecht zur Tragschiene 1 abgehoben werden. Insgesamt ist die Abmessung a der Ausnehmung 16 bei einer mittigen Anordnung der Tragschiene in derselben und gleichgroßer Einstecktiefe t sämtlicher Klemmen 31 zumindest um die doppelte Einstecktiefe t größer als die Abmessung b der Tragschiene - jeweils in Verschieberichtung, d.h. in Richtung der Hochachse des Gerätes gesehen - gewählt, um den Vorteil des Abhebens des Gerätes senkrecht zur Tragschiene 1 zu erreichen, gleichgültig , ob die Klemmen 31 im oberen oder unteren Bereich des Gerätes beschaltet sind.

Um diesen Vorteil auch bei einer nicht mittigen Anordnung der Tragschiene in der Ausnehmung 16 bzw. bei einer verschieden großen Einstecktiefe der Klemmen 31 im oberen bzw. unteren Bereich zu gewährleisten, ist die Abmessung a der Ausnehmung 16 in Verschieberichtung, also in Richtung der Hochachse des Gerätes, zumindest um die Summe der Einstecktiefe für die Anschlusselemente der am oberen und unteren Gerätebereich ausgebildeten Klemmen 31 größer als die Abmessung b der Tragschiene in dieser Richtung zu wählen.

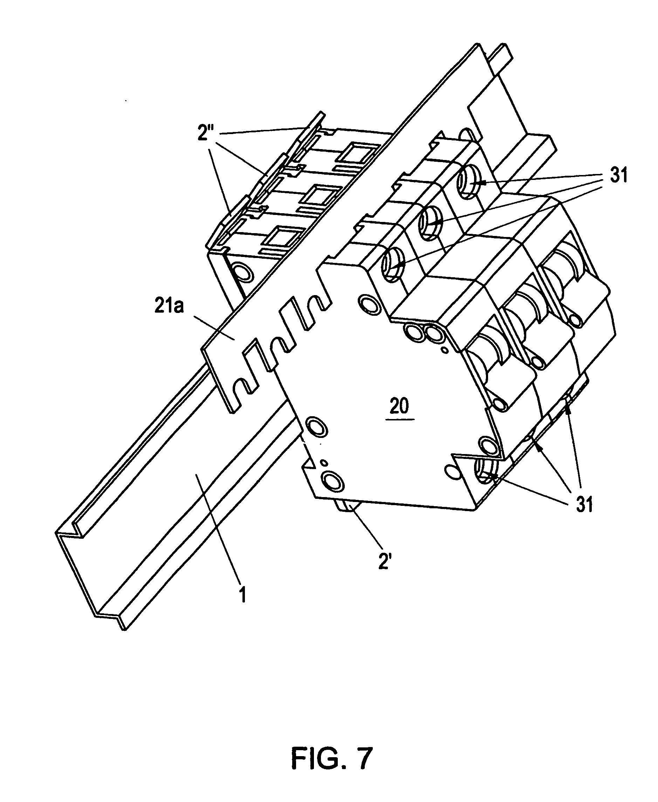

Die Fig. 7 zeigt eine weitere Anordnung mit auf der Tragschiene 1 gehaltenen Geräten 20, wobei eine Kammschiene 21 a in die oberen Klemmen 31 dieser Geräte 20 hineinragt.

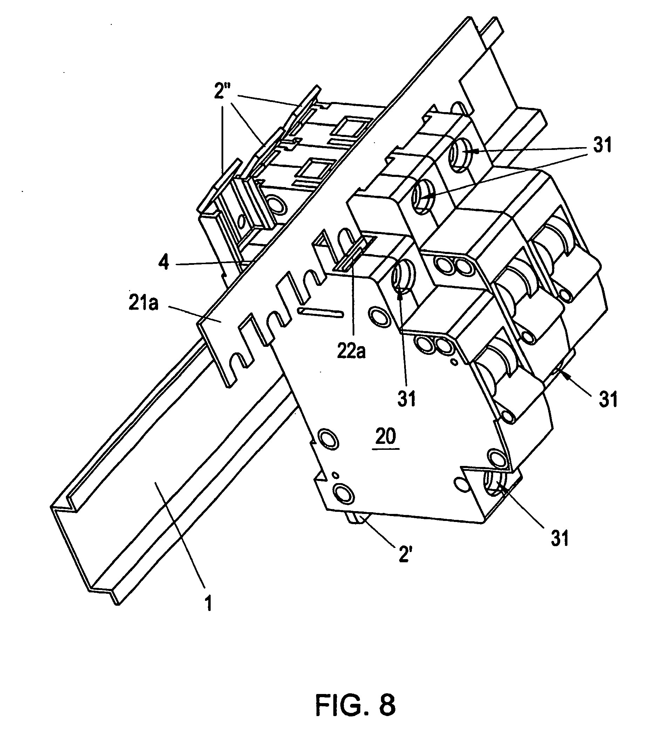

Die Fig. 8 zeigt die gleiche Anordnung wie die Fig. 7, doch ist bei einem Gerät 20 deren obere Halteinrichtung 2" in deren Ruhestellung verschoben, in der diese nicht mehr in den lichten Raum der Ausnehmung 16 hineinragt. Dabei ist dieses Gerät 20 bereits in einer nach unten verschobenen Lage dargestellt, wobei die Anschlusselemente der Klemmschiene 21 a bereits vom Klemmenmaul 22a der oberen Klemme 31 dieses Gerätes frei sind und dieses Gerät 20 daher von der Tragschiene 1 abgenommen werden kann.

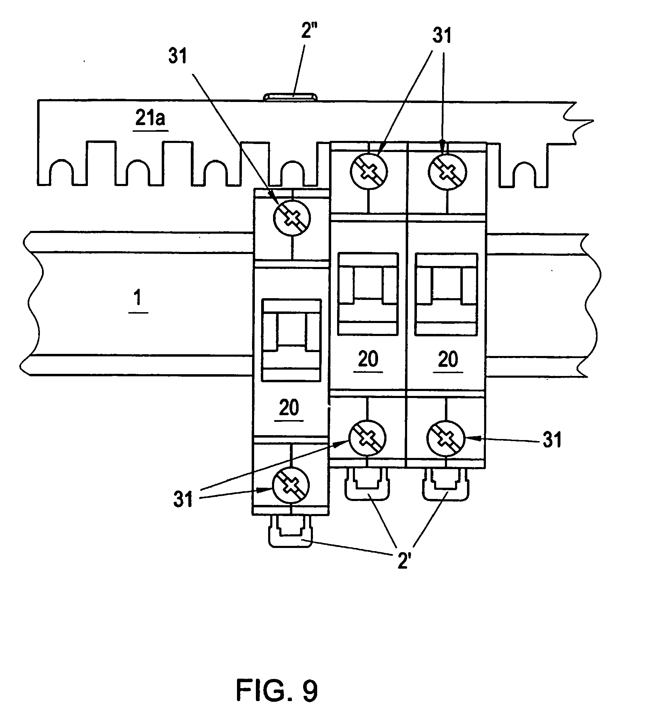

Aus der Fig. 9, die die Anordnung nach der Fig. 8 in Vorderansicht zeigt, ist zu ersehen, dass die unteren Halteeinrichtungen 2' aller Geräte 20 sich in der Arbeitsstellung befinden und sich lediglich die obere Halteeinrichtung 2" des nach unten verschobenen Gerätes 20 in der Ruhestellung befindet.

Dies ist auch aus der Fig. 10 zu ersehen, die eine Seitenansicht der Anordnung nach der Fig.8 zeigt. So ist aus dieser Darstellung zu ersehen, dass die untere Halteeinrichtung 2' des nach unten verschobenen Gerätes 20 in den lichten Raum der Ausnehmung 16 des Gehäuses hineinragt und sich daher in ihrer Arbeitsstellung befindet, wogegen die obere Halteeinrichtung 2" dieses Gerätes 20 nicht in den lichten Raum der Ausnehmung 16 hineinragt und sich daher in deren Ruhestellung befindet.

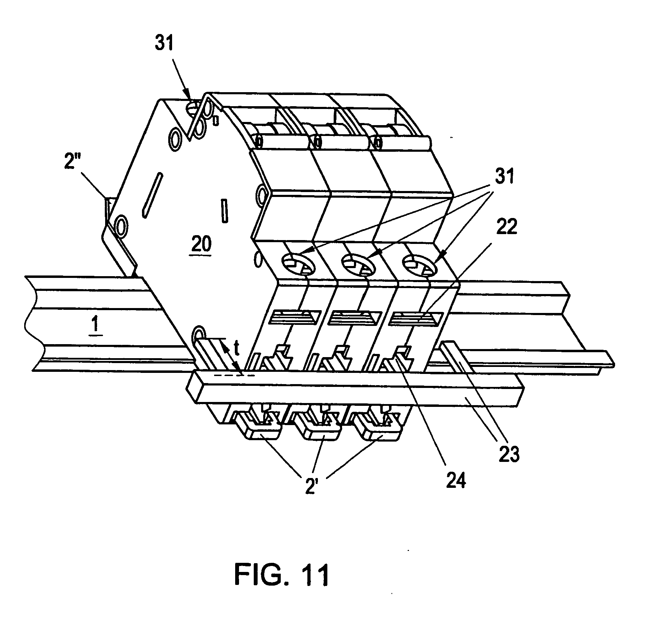

Die Fig. 11 zeigt eine Anordnung mit mehreren an einer Tragschiene 1 gehaltenen Geräten 20, bei denen eine Stiftschiene in die unteren Klemmen 31 der Geräte 20 geklemmt ist.

Durch die oben beschriebenen Maßnahmen kann ein Gerät 20 durch Lösen sowohl der ersten 2' als auch der zweiten 2" Halteeinrichtung quer zur Tragschiene 1 jeweils in eine entgegengesetzte Richtung verschoben und aus einem Verbund von Geräten senkrecht zur Tragschiene 1 abgenommen werden, auch wenn die anderen Geräte über eine Sammelschiene elektrisch und mechanisch miteinander verbunden bleiben, und zwar unabhängig davon, ob eine solche Sammelschiene am oberen oder am unteren Ende des Gerätes angebracht ist. Dies wird wie vorstehend im Zusammenhang mit einem bevorzugten Ausführungsbeispiel erläutert dadurch erreicht, dass die Halteeinrichtungen 2' bzw. 2"jeweils um wenigstens die Einstecktiefe für die Anschlusselemente der Sammelschiene bewegt werden können und somit das Gerät ebenfalls um wenigstens diese Einstecktiefe in Hochachsenrichtung des Gerätes verschoben werden kann.

## Patentansprüche

1. Elektrisches Gerät (20) mit einem Gehäuse (20'), das an seiner Rückseite eine Ausnehmung (16) zur Aufnahme einer Tragschiene (1) aufweist, wobei jeweils in Richtung der Hochachse des Gerätes (20) gesehen die Abmessung (a) der Ausnehmung (16) größer als die Abmessung (b) der Tragschiene (1) ist, wobei wenigstens eine erste Halteeinrichtung (2) und eine zweite Halteeinrichtung (2") vorgesehen sind, welche in den lichten Raum der Ausnehmung (16) einschiebbar und in deren Haltestellung verrastbar sind, von denen mindestens eine in ihrer in den lichten Raum der Ausnehmung (16) hinragenden Arbeitsstellung in Richtung zu deren den lichten Raum freigebenden Ruhestellung hin federnd gehalten ist, und das Gerät (20) in seinem oberen und unteren Bereich mit Klemmen (31) versehen ist in die Anschlusselemente von Sammelschienen (21, 21a, 23) in einer im wesentlichen parallel zur Tragschiene (1) verlaufenden Ebene um eine vorbestimmte Einstecktiefe (t) einsteckbar sind, **dadurch gekennzeichnet, dass** die erste Halteeinrichtung (2') und die zweite Halteeinrichtung (2°) unabhängig voneinander jeweils um wenigstens die Einstecktiefe (t) der Kontakte der Sammelschiene bewegbar sind.

2. Gerät gemäß Anspruch 1, **dadurch gekennzeichnet, dass** die Abmessung (a) der Ausnehmung (16) zumindest um die doppelte Einstecktiefe (t) größer als die Abmessung (b) der Tragschiene (1) ist

3. Gerät gemäß Anspruch 1 oder 2, **dadurch gekennzeichnet, dass** der Boden der Ausnehmung (16) eine mittig angeordnete Vertiefung (30) aufweist, deren Breite der Breite der Tragschiene (1) entspricht.

4. Gerät gemäß Anspruch 1, 2 oder 3, **dadurch gekennzeichnet, dass** eine Halteeinrichtung (2") in ihrer Arbeitslage, in der sie in den lichten Raum der Ausnehmung (16) hineinragt, im wesentlichen start gehalten ist, wobei diese zweite Halteeinrichtung (2") als Haltestück (3) ausgebildet ist, das in Richtung quer zur Tragschiene (1) in Führungen (4) des Gehäuses (20') des Gerätes frei verschiebbar und in der Arbeitslage verrastbar ist.

5. Gerät gemäß einem der Ansprüche 1 bis 4, **dadurch gekennzeichnet, dass** das Haltestück (3) mit einer Entarretierungseinrichtung (5) ausgebildet ist, durch deren Betätigung die Verrastung des Haltestücks (3) lösbar ist.

6. Gerät gemäß einem, der Ansprüche 1 bis 5, **dadurch gekennzeichnet, dass** das Haltestück (3) gegen eine Geräteaußenwand (6) mit Führungsstegen (7) und das Gehäuse (20') des Gerätes (20) mit komplementär zu den Führungsstegen (7) ausgebildeten Führungsnuten (4) ausgebildet ist, in welchen die Führungsstege (7) frei verschiebbar sind.

7. Gerät gemäß einem der Ansprüche 1 bis 6, **dadurch gekennzeichnet, dass** das Haltestück (3) einstückig aus elastischem Kunststoff ausgebildet ist.

8. Gerät gemäß einem der Ansprüche 1, bis 7, **dadurch gekennzeichnet, dass** das Haltestück (3) mit einem gegen die Geräteaußenwand (6) drückenden Federteil (8), vorzugsweise eine Blattfeder, ausgebildet ist, auf dem mindestens eine Einrastnoppe (10) vorgesehen ist, die in Haltestellung an einer Anlagefläche (9) des Gehäuses (20') des Gerätes (20) abgestützt ist.

9. Gerät gemäß einem der Ansprüche 1 bis 6, **dadurch gekennzeichnet, dass** die Entarretierungsvorrichtung (5) als Lasche ausgebildet ist, durch deren Betätigung der Federteil (8) von der Geräteaußenwand (6) weg gedrückt und die wenigstens eine Einrastnoppe (10) außer Eingriff mit einer Anlagefläche (9) des Gehäuses (20') des Gerätes (20) bringbar ist.

10. Gerät gemäß Anspruch 9, **dadurch gekennzeichnet, dass** die Entarretierungsvorrichtung (5) als eine abgewinkelte Betätigungslasche ausgebildet ist.

11. Gerät gemäß einem der Ansprüche 1 bis 10, **dadurch gekennzeichnet dass** das Gerät mit einer Begrenzung (11), vorzugsweise in Form einer Noppe, für den Verschiebeweg des Haltestücks (3) in Richtung der Freigabestellung ausgebildet ist.

12. Gerät gemäß Anspruch 11, **dadurch gekennzeichnet, dass** der Federteil (8) mit einem sich im wesentlichen in Längsrichtung des Haltestücks (2) erstreckenden Durchbruch (12) ausgebildet ist, in welchem die in Form einer Noppe ausgeführte Begrenzung (11) eingreift.

## Claims

1. An electric device (20) with a housing (20') which comprises a recess (16) on its rear side for receiving a support rail (1), with the dimension (a) of the recess (16) being larger than the dimension (b) of the support rail (1) as seen in the direction of the vertical axis of the device (20), with at least one first holding device (2') and a second holding device (2") being provided which can be slid into the clearance of the recess (16) and can be latched in their holding position, of which at least one is held in a resilient manner in the direction towards its idle position releasing the clearance in its working position protruding into the clearance of the recess (16), and the device (20) is provided with terminals in its upper and bottom region in which the connecting elements of busbars (21, 21a, 23) can be inserted by a predetermined insertion depth (t) in a plane extending substantially parallel to the support rail (1), **characterized in that** the first holding device (2') and the second holding device (2") can be moved independent from each other by at least the insertion depth (t) of the contacts of the busbar.

2. A device according to claim 1, **characterized in that** the dimensions (a) of the recess (16) is larger by at least twice the insertion depth (t) than the dimension (b) of the support rail (1).

3. A device according to claim 1 or 2, **characterized in that** the floor of the recess (16) comprises a centrally arranged depression (30) whose width corresponds to the width of the support rail (1).

4. A device according to claim 1, 2 or 3, **characterized in that** a holding device (2") is held in a substantially rigid fashion in its working position in which it protrudes into the clearance of the recess (16), with said second holding device (2") being arranged as a holding element (3) which is freely displaceable in guides (4) of the housing (20') of the device in the direction transversally to the support rail (1) and can be latched in the working position.

5. A device according to one of the claims 1 to 4, **characterized in that** the holding element (3) is provided with an unlatching device (5), through actuation of which the holding element (3) can be unlatched.

6. A device according to one of the claims 1 to 5, **characterized in that** the holding element (3) is arranged against an outside wall (6) of the device with guide webs (7) and the housing (20') of the device (20) is provided with guide grooves (4) which are complementary to the guide webs (7) and in which the guide webs (7) are freely displaceable.

7. A device according to one of the claim to 6, **characterized in that** the holding element (3) is made integrally from elastic plastic.

8. A device according to one of the claims 1 to 7, **characterized in that** the holding element (3) is arranged with a spring portion dressing against the outside wall (6) of the device, preferably a leaf spring, on which at least one latching knob (10) is provided which in the holding position is supported on a contact surface (9) of tire housing (20') of the device (20).

9. A device according to one of the claims 1 to 6, **characterized in that** the unlatching apparatus (5) is arranged as a bracket, through actuation of which the spring portion (8) is pressed away from the outside wall (6) of the device and the at least one latching knob (10) can be brought out of engagement with a contact surface (9) of the housing (20') of the device (20).

10. A device according to claim 9, **characterized in that** the unlatching apparatus (5) is arranged as a bent-off actuating bracket.

11. A device according to one of the claims 1 to 10, **characterized in that** the device is arranged with a boundary (11), preferably in the form of a knob, for the path of displacement of the holding element (3) in the direction of the release position.

12. A device according to claim 11, **characterized in that** the spring portion (8) is arranged with a breakthrough (12) extending substantially in the longitudinal direction of the holding element (29), in which the boundary (11) arranged in the form of a knob will engage.

## Revendications

1. Appareil électrique (20) avec un boîtier (20') qui présente sur sa face arrière un évidement (16) destiné à recevoir un rail de support (1), dans lequel, dans la direction de l'axe vertical de l'appareil (20), la dimension (a) de l'évidement (16) est plus grande que la dimension (b) du rail de support (1), dans lequel sont prévus au moins un premier dispositif de maintien (2') et un deuxième dispositif de maintien (2") qui peuvent être insérés dans l'espace ouvert de l'évidement (16) et emboîtés dans leur position de maintien, l'un au moins étant retenu de façon élastique dans sa position de travail en saillie dans l'espace libre de l'évidement (16) en direction de sa position de repos dégageant l'espace libre, et dans lequel l'appareil (20) est muni dans sa partie supérieure et inférieure de bornes (31) dans lesquelles des éléments de connexion de barres collectrices (21, 21a, 23) peuvent être enfichés dans un plan sensiblement parallèle au rail de support (1) sur une profondeur d'insertion (t) prédéterminée, **caractérisé en ce que** le premier dispositif de maintien (2') et le deuxième dispositif de maintien (2") peuvent être déplacés indépendamment l'un de l'autre de la profondeur d'insertion (t) des contacts de la barre collectrice.

2. Appareil selon la revendication 1, **caractérisé en ce que** la dimension (a) de l'évidement (16) est plus grande que la dimension (b) du rail de support (1) d'au moins le double de la profondeur d'insertion (t).

3. Appareil selon la revendication 1 ou 2, **caractérisé en ce que** le fond de l'évidement (16) présente un creux (30) disposé au milieu, dont la largeur correspond à celle du rail de support (1).

4. Appareil selon la revendication 1, 2 ou 3, **caractérisé en ce qu'**un dispositif de maintien (2") est retenu dans sa position de maintien, dans laquelle il dépasse dans l'espace ouvert de l'évidement (16), de façon sensiblement rigide, le deuxième dispositif de maintien (2") étant conformé comme une pièce de maintien (3) qui peut coulisser librement dans un sens perpendiculaire au rail de support (1) dans des guides (4) du boîtier (20') de l'appareil et s'emboîter dans la position de travail.

5. Appareil selon l'une des revendications 1 à 4, **caractérisé en ce que** la pièce de maintien (3) est munie d'un dispositif de déblocage (5) dont l'actionnement permet de défaire l'emboîtement de la pièce de maintien (3).

6. Appareil selon l'une des revendications 1 à 5, **caractérisé en ce que** la pièce de maintien (3) est dotée vers une paroi extérieure (6) du boîtier de barrettes de guidage (7) et le boîtier (20') de l'appareil (20) est doté de gorges de guidage (4) de forme complémentaire des barrettes de guidage (7), dans lesquelles les barrettes de guidage (7) peuvent coulisser librement.

7. Appareil selon l'une des revendications 1 à 6, **caractérisé en ce que** la pièce de maintien (3) est construite d'un seul tenant en matière plastique élastique.

8. Appareil selon l'une des revendications 1 à 7, **caractérisé en ce que** la pièce de maintien (3) est munie d'une partie formant ressort (8) appuyant contre la paroi extérieure (6) du boîtier, de préférence un ressort à lames, sur laquelle est prévu au moins un bouton d'engagement (10) qui s'appuie, dans la position de maintien, sur une surface d'appui (9) du boîtier (20') de l'appareil (20).

9. Appareil selon l'une des revendications 1 à 6, **caractérisé en ce que** le dispositif de déblocage (5) est conçu comme une languette dont l'actionnement écarte la partie formant ressort (8) de la paroi extérieure (6) du boîtier et permet de dégager l'au moins un bouton d'engagement (10) de sa prise avec une surface d'appui (9) du boîtier (20') de l'appareil (20).

10. Appareil selon la revendication 9, **caractérisé en ce que** le dispositif de déblocage (5) est conformé comme une patte d'actionnement coudée.

11. Appareil selon l'une des revendications 1 à 10, **caractérisé en ce que** l'appareil est muni d'une limitation (11), de préférence sous la forme d'un bouton, pour la distance de translation de la pièce de maintien (3) vers la position de dégagement.

12. Appareil selon la revendication 11, **caractérisé en ce que** la partie formant ressort (8) est munie d'une ouverture (12) qui s'étend sensiblement dans le sens longitudinal de l'élément de maintien (2) et à travers laquelle la limitation (11) construite comme un bouton (11) se met en prise.
